(19) Europäisches Patentamt
European Patent Office
Office européen des brevets

(11) **EP 2 163 139 B1**

(12) **EUROPÄISCHE PATENTSCHRIFT**

(45) Veröffentlichungstag und Bekanntmachung des Hinweises auf die Patenterteilung:
**02.03.2011  Patentblatt 2011/09**

(21) Anmeldenummer: **07786919.6**

(22) Anmeldetag: **29.06.2007**

(51) Int Cl.:
***H05B 37/02*** *(2006.01)*

(86) Internationale Anmeldenummer:
**PCT/EP2007/056534**

(87) Internationale Veröffentlichungsnummer:
**WO 2009/003509 (08.01.2009 Gazette 2009/02)**

(54) **SCHALTUNGSANORDNUNG UND VERFAHREN ZUM BETREIBEN MINDESTENS EINER LED UND MINDESTENS EINER LEUCHTSTOFFLAMPE**

CIRCUIT ARRANGEMENT AND METHOD FOR OPERATING AT LEAST ONE LED AND AT LEAST ONE FLUORESCENT LAMP

ARRANGEMENT DE CIRCUIT ET PROCÉDÉ POUR FAIRE FONCTIONNER AU MOINS UNE LED ET AU MOINS UN TUBE FLUORESCENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**17.03.2010  Patentblatt 2010/11**

(73) Patentinhaber: **Osram Gesellschaft mit beschränkter Haftung
81543 München (DE)**

(72) Erfinder:
• **DELLIAN, Harald
83533 Edling (DE)**
• **FRANCK, Felix
80333 München (DE)**

(56) Entgegenhaltungen:
**WO-A-02/062106     DE-A1-102005 032 315
GB-A- 2 334 832**

**Beschreibung**

Technisches Gebiet

Die vorliegende Erfindung betrifft eine Schaltungsanordnung zum Betreiben mindestens einer LED und mindestens einer Leuchtstofflampe mit einem Eingang mit einem ersten und einem zweiten Eingangsanschluss zum Anschließen einer Versorgungswechselspannung, einem Hauptgleichrichter, der einen ersten und einen zweiten Eingangsanschluss und einen ersten und einen zweiten Ausgangsanschluss aufweist, wobei der erste und der zweite Eingangsanschluss des Hauptgleichrichters mit dem ersten und dem zweiten Eingangsanschluss zum Anschließen der Versorgungswechselspannung gekoppelt sind, einem Hilfsgleichrichter, der einen ersten und einen zweiten Eingangsanschluss und einen ersten und einen zweiten Ausgangsanschluss aufweist, wobei der erste und der zweite Eingangsanschluss des Hilfsgleichrichters mit dem ersten und dem zweiten Eingangsanschluss zum Anschließen der Versorgungswechselspannung gekoppelt sind, einem Wechselrichter, der mindestens eine Serienschaltung aus einem ersten und einem zweiten Schalter umfasst, wobei die Serienschaltung mit dem ersten und dem zweiten Ausgangsanschluss des Hauptgleichrichters gekoppelt ist und dessen Ausgang mindestens einen Anschluss zum Anschließen der Leuchtstofflampe aufweist, wobei der erste und der zweite Schalter jeweils eine Steuerelektrode, eine Arbeitselektrode und eine Bezugselektrode aufweisen, einer Startvorrichtung mit einem ersten und einem zweiten Anschluss, wobei ihr erster Anschluss mit einer Steuerelektrode eines der Schalter des Wechselrichters gekoppelt ist, einer Pull-Down-Schaltung mit einem ersten und einem zweiten Anschluss, wobei ihr erster Anschluss mit dem Ausgang des Wechselrichters gekoppelt ist, und einem Startkondensator zum Bereitstellen von Energie für die Startvorrichtung.

Sie betrifft weiterhin ein Verfahren zum Betreiben mindestens einer LED und mindestens einer Leuchtstofflampe an einer derartigen Schaltungsanordnung, wobei der zweite Anschluss der Startvorrichtung und der zweite Anschluss der Pull-Down-Schaltung mit dem ersten Ausgangsanschluss des Hilfsgleichrichters gekoppelt sind, wobei der Startkondensator zwischen den ersten und den zweiten Ausgangsanschluss des Hilfsgleichrichters gekoppelt ist, und wobei parallel zum Startkondensator eine Serienschaltung angeordnet ist, die einen ersten und einen zweiten Anschluss für die mindestens eine LED und einen LED-Schalter umfasst, wobei der LED-Schalter eine Steuerelektrode, eine Arbeitselektrode und eine Bezugselektrode aufweist, und einem Zeitglied, das einen Zeitgliedkondensator aufweist.

Stand der Technik

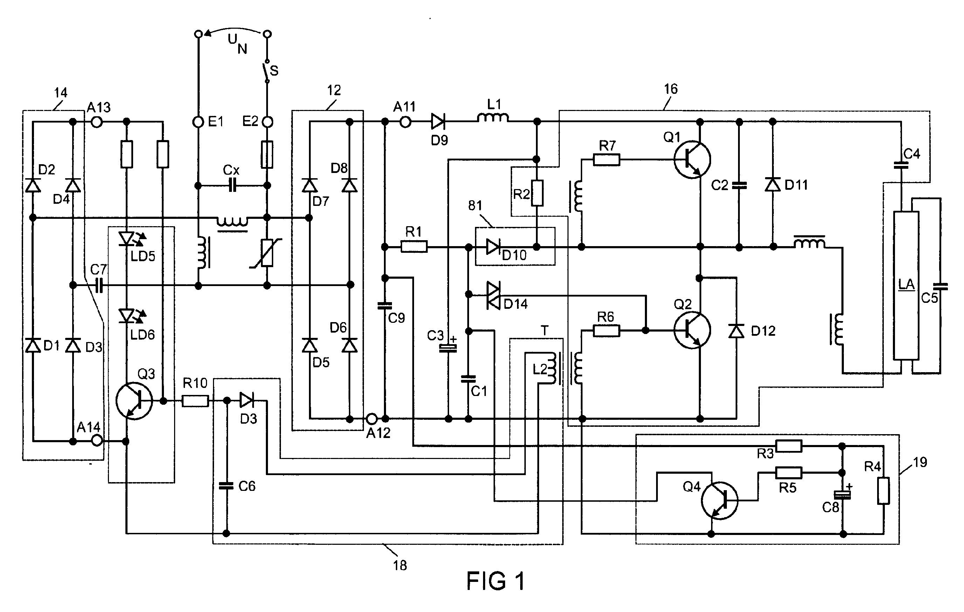

Fig. 1 zeigt eine aus dem Stand der Technik bekannte, gattungsgemäße Schaltungsanordnung. Diese weist einen Eingang mit einem ersten E1 und einem zweiten Eingangsanschluss E2 auf. Über den ersten E1 und den zweiten Eingangsanschluss E2 kann die Schaltungsanordnung mittels eines Schalters S an eine Netzspannung $U_N$ gekoppelt werden. Die Schaltungsanordnung umfasst einen Hauptgleichrichter 12, der die Dioden D5, D6, D7, D8 umfasst. Der Eingang des Hauptgleichrichters 12 ist mit den Eingangsanschlüssen E1, E2 gekoppelt. Sie umfasst weiterhin einen Hilfsgleichrichter 14, der die Dioden D1, D2, D3 und D4 umfasst. Der Eingang des Hilfsgleichrichters 14 ist ebenfalls mit dem ersten E1 und dem zweiten Eingangsanschluss E2 gekoppelt. Weiterhin ist ein Wechselrichter 16 vorgesehen, der vorliegend als Halbbrückenschaltung ausgebildet ist und einen ersten Schalter Q1 und einen zweiten Schalter Q2 umfasst, die zueinander in Serie geschaltet sind. Diese Serienschaltung ist mit dem ersten A11 und dem zweiten Ausgangsanschluss A12 des Hauptgleichrichters 12 gekoppelt, wobei die zwischen den beiden Ausgangsanschlüssen A11, A12 bereitgestellte Spannung, die üblicherweise als Zwischenkreisspannung bezeichnet wird, durch einen Kondensator C3 gestützt wird. Der Ausgangsanschluss des Wechselrichters 16 ist mit einer Leuchtstofflampe LA gekoppelt. Der erste Q1 und der zweite Schalter Q2 weisen jeweils eine Steuerelektrode, eine Arbeitselektrode und eine Bezugselektrode auf. Als Startvorrichtung ist ein DIAC D14 vorgesehen, dessen einer Anschluss mit der Steuerelektrode des Schalters Q2 des Wechselrichters 16 gekoppelt ist. Überdies ist eine Pull-Down-Schaltung 81 vorgesehen, die vorliegend durch die Diode D10 gebildet wird, wobei einer der Anschlüsse der Diode D10 mit dem Ausgang des Wechselrichters 16 gekoppelt ist. Schließlich ist ein Startkondensator C1 vorgesehen, der über den ohmschen Widerstand R1 (erster Pull-Up-Widerstand) geladen wird, und der der Bereitstellung von Energie für die Startvorrichtung D14 dient. Der zweite Pull-Up-Widerstand R1 konditioniert in der Zeit zwischen der Ankopplung einer Netzspannung durch Schließen des Schalters S und dem Starten des Wechselrichters 16 durch den DIAC D14 den Wechselrichter 16 in der Art, dass an dem Wechselrichterschalter, dessen Steuerelektrode mit der Startvorrichtung gekoppelt ist, direkt vor dem Start eine Spannung größer Null anliegt, um das Starten des Wechselrichters 16 sicherzustellen. Deshalb zählt dieser Widerstand zu den Bestandteilen des Wechselrichters 16.

Eine erste LD5 und eine zweite LED LD6 sind mit dem Ausgang des Hilfsgleichrichters 14 gekoppelt und können über einen Schalttransistor Q3 ein- und ausgeschaltet werden. Ein ohmscher Widerstand R9 wirkt als Strombegrenzungswiderstand.

Ausgehend von einem Aus-Zustand dieser in Fig. 1 dargestellten Schaltungsanordnung werden nach einem einmaligen Einschalten des Schalters S die LEDs LD5, LD6 eingeschaltet, da gleichzeitig die Basis des LED-Schalters Q3 über den Widerstand R8 auf ein höheres Potential gebracht wird und deshalb der LED-Schalter einschaltet. Eine Zeitsteuerung erfolgt über den ohmschen Widerstand R10 und den Kondensator C6 und wird im Folgenden mit LED-Ausschaltverzögerung bezeichnet. Parallel hierzu wird der Kollektor des Transistors Q4 über den ohmschen Widerstand R1 mit dem hohen Potential am Ausgang des Hauptgleichrichters 12 verbunden. Die Basis des Transistors Q4 ist über ein Zeitschaltglied, das die Widerstände R3 und R4 sowie den Kondensator C8 umfasst, ebenfalls mit dem hohen Potential am Ausgang des Hauptgleichrichters 12 verbunden. Durch die Ladung des Kondensators C8 verzögert sich das Einschalten des Transistors Q4. Die entsprechenden Bauelemente sind jedoch so dimensioniert, dass Q4 leitend wird, bevor am Kondensator C1 eine Spannung anliegt, die zur Zündung des DIACs D14 genügen würde. Der Kondensator C1 wird ebenfalls über den ohmschen Widerstand R1 mit dem Ausgang A11, A12 des Hauptgleichrichters 14 gekoppelt und wird daher ebenfalls geladen. Da der Schalttransistor Q4 leitend wird, bevor am Kondensator C1 eine zur Zündung des DIACs D14 ausreichende Spannung anliegt, die vorzugsweise 33V oder 34V beträgt, wird in dieser Situation der DIAC D14 nicht gezündet, weshalb die Leuchtstofflampe LA ausgeschaltet bleibt. Deshalb wird im Weiteren die hier dargestellte Kombination aus den Bauteilen R3, R4, R5, C8 und Q4 als Wechselrichterstart-Verhinderungsvorrichtung 19 bezeichnet. Wichtig hierbei ist zudem, dass bei aktiver Vorrichtung 19 der Startkondensator nur teilweise entladen wird, vorzugsweise auf etwa 20V. Erreicht wird dies dadurch, dass die Impedanz aus der Parallelschaltung von R3 und R4 dividiert durch die Impedanz des R1 in etwa die Stromverstärkung des Transistors Q4 ergibt.

Wird nunmehr der Schalter S kurz aus- und sofort wieder eingeschaltet, gehen die LEDs LD5, LD6 nach dem bereits beschriebenen Ablauf wieder an. Entscheidend ist nunmehr, dass der Kondensator C1 während der kurzen Ausschaltdauer eine Restspannung behalten hat, während der Kondensator C8 über den Widerstand R4 entladen wurde. Beim neuerlichen Einschalten des Schalters S hat daher der Kondensator C1 einen Ladungsvorsprung gegenüber dem Kondensator C8. Dies führt dazu, dass die Spannung am Kondensator C1 so hochsteigt, dass der DIAC D14 zündet, bevor die an der Basis des Transistors Q4 anliegende Spannung ausreichen würde, um den Transistor Q4 leitend zu schalten. Als Folge wird der Wechselrichter 16 in Betrieb gesetzt, wodurch die Leuchtstofflampe LA zusätzlich zu den LEDs eingeschaltet wird. Durch eine LED-Ausschaltvorrichtung 18 wird, wenn der Wechselrichter 16 in Betrieb ist, mittels einer vierten Wicklung des darin vorgesehenen Transformators L2 (T) die Basis des LED-Schalters Q3 ausgeräumt, wodurch die LEDs LD5, LD6 ausgeschaltet werden.

Die in Fig. 1 dargestellten, nicht erwähnten Bauelemente sind für das Verständnis der vorliegenden Erfindung von untergeordneter Bedeutung und werden deshalb nicht explizit eingeführt. Die in Fig. 1 dargestellte Schaltungsanordnung weist im Grunde zwei vollständige Energieversorgungen auf, eine erste für die Leuchtstofflampe und eine zweite, die am Wechselspannungsnetz parallel abgezweigt ist, mit eigenem Vollbrückengleichrichter, der 600 V-Dioden umfasst sowie einen Vorwiderstand und einen Schalttransistor für die mindestens eine LED. Der LED-Schalter wird über eine Pull-Up-Schaltung leitfähig geschaltet und von einer invers wirkenden Schaltung ausgeschaltet, sobald der Wechselrichter schwingt. Dazu ist ein Saugkreis nötig, der von einer vierten Wicklung L2 (T) auf dem Halbbrücken-Ansteuer-Übertrager T potentialfrei angetrieben wird. Die anderen drei Wicklungen dienen der Ansteuerung der beiden Schalter des Wechselrichters. Das Nichtanschwingen des Wechselrichters wird von einer unabhängigen Zeitschaltung, der oben bereits erwähnten Wechselrichterstart-Verhinderungsvorrichtung 19 übernommen.

Mit der Schaltungsanordnung von Fig. 1 gehen mehrere Nachteile einher: So handelt es sich bei dem Hilfsgleichrichter 14 um einen Gleichrichter, der auf 600 V ausgelegt sein muss, wenn die Schaltungsanordnung an ein übliches Wechselspannungsnetz angeschlossen werden soll. Da im Betrieb der mindestens einen Leuchtdiode allein am ohmschen Widerstand R9 beinahe die gesamte Ausgangsspannung des Hilfsgleichrichters 14 anliegt, muss dieser auf große Verlustleistung dimensioniert sein, und verringert dadurch den Wirkungsgrad der Schaltungsanordnung beträchtlich. Der LED-Schalter Q3 muss im ausgeschalteten Zustand, also dann, wenn der Wechselrichter 16 aktiv ist, bis 600 V sperren können.

Ein weiterer Nachteil besteht in dem Vorhandensein dreier voneinander völlig unabhängiger Zeitschaltungen, nämlich der LED-Ausschaltverzögerung aus R10 und C6, der Wechselrichter-Startschaltung aus R1 und C1, sowie der Wechselrichterstart-Verzögerungsvorrichtung 19, die alle drei gemeinsam einen Entweder-Oder-Prozess steuern sollen. Das reibungslose Funktionieren dieses Systems ist ausschließlich durch exaktes Dimensionieren aller beteiligten Bauteile zu erreichen, weshalb die Gesamtschaltung extrem anfällig gegenüber Bauteile- und Fertigungstoleranzen ist.

Die der vorliegenden Erfindung zugrunde liegende Aufgabe besteht deshalb darin, eine eingangs genannte Schaltungsanordnung bzw. ein eingangs genanntes Verfahren derart weiterzubilden, dass ein günstigerer Wirkungsgrad erzielt werden kann, die Empfindlichkeit der Schaltung gegenüber Toleranzen reduziert werden kann und kostengünstigere Bauelemente zur Realisierung verwendet werden können.

Darstellung der Erfindung

Diese Aufgabe wird gelöst durch eine Schaltungsanordnung mit den Merkmalen von Patentanspruch 1 sowie durch ein Verfahren mit den Merkmalen von Patentanspruch 16.

Die vorliegende Erfindung basiert auf der Erkenntnis, dass die obige Aufgabe gelöst werden kann, wenn der Startkondensator nicht mehr aus dem Hauptgleichrichter geladen wird, sondern aus dem Hilfsgleichrichter. Er ist deshalb zwischen den ersten und den zweiten Ausgangsanschluss des Hilfsgleichrichters zu koppeln. Weiterhin wird parallel zum Startkondensator eine Serienschaltung angeordnet, die einen ersten und einen zweiten Anschluss für die mindestens eine LED und einen LED-Schalter umfasst, wobei der LED-Schalter eine Steuerelektrode, eine Arbeitselektrode und eine Bezugselektrode aufweist. Dabei ist der Hilfsgleichrichter lediglich auf die Spannung zu dimensionieren, die zum Zünden der Startvorrichtung, d. h. beispielsweise des DIACs, ausreicht. Hierbei fallen um den Faktor 10 kleinere Spannungen an als beim Hilfsgleichrichter gemäß dem Stand der Technik. Insofern kann der LED-Schalter auf eine deutlich geringere Sperrspannung dimensioniert sein. Der ohmsche Widerstand R9 aus dem Stand der Technik ist nicht mehr nötig. Die Zeitsteuerung kann überdies einfacher ausgebildet sein: So lange die LEDs leuchten, d. h. die am Kondensator C1 und damit die an der Startvorrichtung anliegende Spannung kleiner der Zündspannung der Startvorrichtung ist, kann die Leuchtstofflampe nicht angehen. Überdies ist vorgesehen, dass der zweite Anschluss der Startvorrichtung und der zweite Anschluss der Pull-Down-Schaltung mit dem ersten Ausgangsanschluss des Hilfsgleichrichters gekoppelt sind. Dies führt dazu, dass, wenn die Leuchtstofflampe leuchtet, der Startkondensator über die Pull-Down-Schaltung entladen wird, so dass die an der mindestens einen LED anliegende Spannung unterhalb derer Flussspannung liegt und damit die mindestens eine LED sicher aus ist.

Damit sind überdies nicht mehr zwei Hilfstransistoren nötig, wie dies im Stand der Technik der Fall war, sondern es genügt bereits einer. Die den Leuchtstofflampenbetrieb stark negative beeinflussende vierte Wicklung auf dem Ansteuerübertrager für die Schalter des Wechselrichters kann ebenfalls entfallen. Durch die Verkopplung mit der Startschaltung ist die gesamte, für den Betrieb der LEDs benötigte Teilschaltung sicher auf die Zündspannung der Startvorrichtung begrenzt. Die Schaltlogik ist mit den Spannungspegeln am Startkondensator umkehrbar eindeutig verknüpft, lediglich das Einschalten der mindestens einen LED ist zeitgesteuert. Damit sind unerwünschte Schaltkombinationen sicher ausgeschlossen. Überdies entfällt eine Netzdiode (Diode D9 im Stand der Technik) aufgrund des geschickten Anschlusses des Zeitsteuer-Pull-Ups. Der Pull-Up-Widerstand R1 kann ebenfalls entfallen, genauso wie die Schaltungselemente zur Absaugung der Ladungsträger aus der Basis des LED-Schalters.

Besonders bevorzugt umfasst eine erfindungsgemäße Schaltungsanordnung weiterhin ein Zeitglied, dessen Eingang mit dem ersten und/oder dem zweiten Eingangsanschluss des Eingangs gekoppelt ist, und dessen erster Ausgangsanschluss mit der Steuerelektrode des LED-Schalters gekoppelt ist, und dessen zweiter Ausgangsanschluss mit der Bezugselektrode des LED-Schalters gekoppelt ist. Diese Zeitsteuerung kommt ohne einen eigenen Transistor aus, steuert vielmehr den bereits seriell zur mindestens einen LED angeordneten LED-Schalter an. Sie ist daher mit sehr geringem Aufwand zu realisieren.

Bevorzugt umfasst das Zeitglied zwischen seinem ersten und seinem zweiten Ausgangsanschluss die Parallelschaltung eines Zeitgliedkondensators und eines ersten ohmschen Widerstands, wobei das Zeitglied weiterhin einen zweiten ohmschen Widerstand umfasst, der zwischen den Eingang des Zeitglieds und seinen ersten Ausgangsanschluss gekoppelt ist, wobei die an der Parallelschaltung abfallende Spannung mit dem Ausgang des Zeitglieds gekoppelt ist. Durch die Parallelschaltung des ersten ohmschen Widerstands zum Zeitgliedkondensator kann sichergestellt werden, dass die an der Steuerelektrode des LED-Schalters anliegende Spannung nach einem Abschalten der Wechselspannungsversorgung absinkt, wohingegen die auf dem Startkondensator gespeicherte Ladung langfristig erhalten bleibt, da dem Startkondensator kein ohmscher Widerstand parallelgeschaltet ist. Der zweite ohmsche Widerstand bringt die "angezapfte" Versorgungswechselspannung auf ein Niveau zum Ansteuern des LED-Schalters.

Bevorzugt umfasst das Zeitglied weiterhin einen dritten ohmschen Widerstand, wobei der zweite ohmsche Widerstand zwischen den ersten Eingangsanschluss des Eingangs und den ersten Ausgangsanschluss des Zeitglieds gekoppelt ist, und wobei der dritte ohmsche Widerstand zwischen den zweiten Eingangsanschluss des Eingangs und den ersten Ausgangsanschluss des Zeitglieds gekoppelt ist. Damit kann ein zuverlässiges Einschalten der mindestens einen LED unabhängig davon sichergestellt werden, in welcher Phase sich die Versorgungswechselspannung, die am Eingang angeschlossen ist, befindet.

Es ist weiterhin bevorzugt, dass zwischen den beiden Ausgangsanschlüssen des Zeitglieds eine erste Diode gekoppelt ist, die so orientiert ist, dass sie einen Stromfluss vom Zeitgliedkondensator zum Ausgang des Zeitglieds verhindert. Dies stellt sicher, dass eine Ansteuerung des LED-Schalters nur über den zweiten oder den dritten ohmschen Widerstand erfolgt. Die erste Diode sorgt nämlich dafür, dass keine Ladungsträger aus dem Zeitgliedkondensator an die Steuerelektrode des LED-Schalters gelangen können.

Es ist weiterhin bevorzugt, dass zwischen die beiden Ausgangsanschlüsse des Zeitglieds ein ohmscher Spannungsteiler gekoppelt ist, dessen Abgriff mit der Steuerelektrode des LED-Schalters gekoppelt ist. Dieser Spannungsteiler dient einer quasi künstlichen Erhöhung des Potentials zwischen Steuer- und Bezugselektrode des LED-Schalters. In Weiterbildung dieser Ausführungsform kann vorgesehen sein, dass der Teil des Spannungsteilers, der zwischen den ersten Ausgangsanschluss des Zeitglieds und die Steuerelektrode des LED-Schalters gekoppelt ist, eine zweite Diode umfasst, die so orientiert ist, dass sie einen Stromfluss von der Steuerelektrode des LED-Schalters zum Ausgang des Zeitglieds verhindert. Dadurch wird erreicht, dass die Ausräumung der Steuerelektrode des LED-Schalters einzig nur noch durch den Widerstand zwischen Steuerelektrode und Bezugselektrode des LED-Schalters respektive zweitem Ausgangsanschluss des Zeitglieds bewerkstelligt wird (also vom unteren Teil des genannten Spannungsteilers), was vorteilhaft für das Toleranzverhalten der Schaltung ist. Ferner wird das Ausschalten des LED-Schalters beschleunigt, weil insbesondere das Reagieren der LED-Schalter-Ansteuerung auf Abfälle in den Spannungen an den Eingängen des Zeitglieds digitalisiert wird. Beides führt zu einem zuverlässigen und schnellen Ausschalten des LED-Schalters, wenn es vom Zeitglied entsprechend gefordert wird.

Als vorteilhaft hat sich erwiesen, wenn eine erfindungsgemäße Schaltungsanordnung weiterhin eine elektrische Kopplung zwischen der Arbeitselektrode des LED-Schalters und dem ersten Ausgangsanschluss des Zeitglieds umfasst, die derart ausgebildet ist, dass sie eine Stromgegenkopplung des LED-Schalters bewirkt. Damit wird der Vorteil erreicht, dass der LED-Schalter nie in tiefe Sättigung gerät und dadurch etwas schneller und vor allem zuverlässiger abschaltet, da dieser Vorgang nun unabhängig von der Speicherzeit des LED-Schalters geworden ist. Die Abschaltung selbst wird zwar nicht "schärfer", toleranzabhängige Zeitverzögerungen hingegen sind minimiert.

Eine weitere bevorzugte Ausführungsform zeichnet sich dadurch aus, dass die Arbeitselektrode des LED-Schalters mit dem ersten Ausgangsanschluss des Zeitglieds über eine dritte Diode gekoppelt ist, die derart orientiert ist, dass sie als Antisättigungsdiode für den LED-Schalter wirkt. Dabei wird sichergestellt, dass der LED-Schalter noch schneller ausgeht, dass also der kleine, mit der Stromgegenkopplung einhergehende Nachteil auch noch gelöst ist, und im Gegenzug die Leuchtstofflampe noch sicherer angeht. Sie dient damit zur Stabilisierung des Ladungsvorsprungs des Startkondensators.

Weiterhin ist bevorzugt, wenn das Zeitglied und der Startkondensator, ausgehend von einem Ladezustand des Startkondensators unter einem vorgebbaren Grenzwert, ausgelegt sind, nach einem Anlegen der Versorgungswechselspannung an die Schaltungsanordnung den LED-Schalter einzuschalten, bevor am Startkondensator eine zur Triggerung der Startvorrichtung ausreichende Spannung anliegt. Befindet sich die Schaltungsanordnung im Aus-Zustand, wird daher nach einem Einschalten des Schalters S, der insbesondere beispielsweise ein üblicher Wandschalter sein kann, zunächst die mindestens eine LED eingeschaltet. Da der LED-Schalter zu leiten beginnt, bevor am Startkondensator eine zur Triggerung der Startvorrichtung ausreichende Spannung anliegt, und damit die Spannung am Startkondensator inhärent auf die Flussspannungen der mindestens einen LED und die Arbeitsspannung des LED-Schalters geklemmt ist, bleibt die Leuchtstofflampe ausgeschaltet.

In diesem Zusammenhang ist weiterhin bevorzugt, dass das Zeitglied und der Startkondensator, ausgehend von einem Ladezustand des Startkondensators über einem vorgebbaren Grenzwert, ausgelegt sind, nach einem Anlegen der Versorgungswechselspannung die Startvorrichtung zu Triggern, bevor an der Steuerelektrode des LED-Schalters eine zum Einschalten des LED-Schalters ausreichende Spannung anliegt. Wird demnach eine bereits kurzzeitig betriebene erfindungsgemäße Schaltungsanordnung kurz ausgeschaltet und wieder eingeschaltet, behält der Startkondensator einen Ladungsvorsprung gegenüber dem Zeitgliedkondensator. Beide werden wieder geladen, wobei jedoch nunmehr aufgrund des Ladungsvorsprungs der Startkondensator die zur Triggerung der Startvorrichtung nötige Spannung erreicht, bevor an der Steuerelektrode des LED-Schalters eine zum Einschalten des LED-Schalters ausreichende Spannung anliegt. Dadurch wird die Startvorrichtung getriggert und die Leuchtstofflampe in Betrieb gesetzt. Wenngleich die Spannung zwischen Steuer- und Bezugselektrode des LED-Schalters infolge soweit anwächst, dass der LED-Schalter in den leitenden Zustand gerät, bleiben die LEDs jedoch aus, da die Versorgung der mindestens einen LED, die die Spannung am Startkondensator darstellt, nach Triggerung der Startvorrichtung aufgrund einer Pull-Down-Schaltung auf zu kleine Werte zusammengebrochen ist, als dass diese ausreichen würde, um einen Strom durch die mindestens eine LED und den einen LED-Schalter zu treiben.

Bevorzugt umfasst die Pull-Down-Schaltung die Serienschaltung eines ohmschen Widerstands und einer Diode. Hierbei ist zu berücksichtigen, dass der Pull-Down-Widerstand dabei für kleinere Spannungen ausgelegt sein kann als der Pull-Up-Widerstand im Stand der Technik und daher kostengünstiger zu realisieren ist.

Bei einer bevorzugten Ausführungsform ist zwischen den ersten Eingangsanschluss des Eingangs und den ersten Eingangsanschluss des Hilfsgleichrichters ein erster Kondensator und zwischen den zweiten Eingangsanschluss des Eingangs und den zweiten Eingangsanschluss des Hilfsgleichrichters ein zweiter Kondensator gekoppelt. Diese übernehmen die Funktion einer galvanischen DC-Entkopplung zwischen der Hauptversorgung durch den Hauptgleichrichter und der Hilfsversorgung durch den Hilfsgleichrichter sowie einer Strombegrenzung des Stroms durch die mindestens eine

LED ($\mathrm{I}_{\mathrm{LED}} = (\mathrm{C}_{\mathrm{L}1}/2) \star \frac{\delta U_N}{\delta t}$). Bevorzugt

ist zwischen den ersten Eingangsanschluss und den zweiten Eingangsanschluss des Hilfsgleichrichters ein dritter Kondensator gekoppelt. Dieser wirkt als EMV-Kondensator und ist zu dem ersten und dem zweiten Kondensator in Serie geschaltet. Daher liegt an ihm nur eine sehr kleine Spannung an, weshalb reduzierte Sicherheitsanforderungen gelten und dieser dritte Kondensator sehr kostengünstig realisiert werden kann. Der erste und der zweite Kondensator sind bevorzugt gleich groß.

Schließlich ist bevorzugt, wenn der Hilfsgleichrichter dimensioniert ist, eine Spannung an seinem Ausgang bereitzustellen, die maximal 110 % der Triggerspannung der Startvorrichtung, insbesondere maximal 35 V entspricht. Damit ist der Hilfsgleichrichter auf einen Bruchteil der Spannung dimensioniert wie der Hilfsgleichrichter in der aus dem Stand der Technik bekannten Schaltungsanordnung.

Weitere vorteilhafte Ausführungsformen ergeben sich aus den Unteransprüchen. Die mit Bezug auf die erfindungsgemäße Schaltungsanordnung vorgestellten bevorzugten Ausführungsformen und deren Vorteile gelten, soweit anwendbar, ebenso für das erfindungsgemäße Verfahren.

Kurze Beschreibung der Zeichnung(en)

Im Nachfolgenden wird nunmehr ein Ausführungsbeispiel einer erfindungsgemäßen Schaltungsanordnung unter Bezugnahme auf die beigefügten Zeichnungen näher beschrieben. Es zeigen:

Fig. 1 in schematischer Darstellung eine aus dem Stand der Technik bekannte Schaltungsanordnung zum Betreiben mindestens einer LED und mindestens ei- ner Leuchtstofflampe;

Fig. 2 in schematischer Darstellung eine erfindungsgemäße Schaltungsanordnung;

Fig. 3 in schematischer Darstellung den Aufbau eines Aus- führungsbeispiels für die Pull-Down-Schaltung;

Fig. 4 in schematischer, detaillierter Darstellung einen Teil der erfindungsgemäßen Schaltungsanordnung von Fig. 2;

Fig. 5 in schematischer Darstellung eine gegenüber der Darstellung von Fig. 4 modifizierte Ansteuerung des LED-Schalters; und

Fig. 6 den zeitlichen Verlauf diverser Größen von Fig. 2 und 4 bei Realisierung der Ansteuerung des LED- Schalters gemäß Fig. 5.

Bevorzugte Ausführung der Erfindung

Für gleiche oder funktionsgleiche Bauelemente werden im Nachfolgenden die bereits mit Bezug auf Fig. 1 eingeführten Bezugszeichen weiter verwendet. Sie werden der Übersichtlichkeit halber nicht nochmals eingeführt.

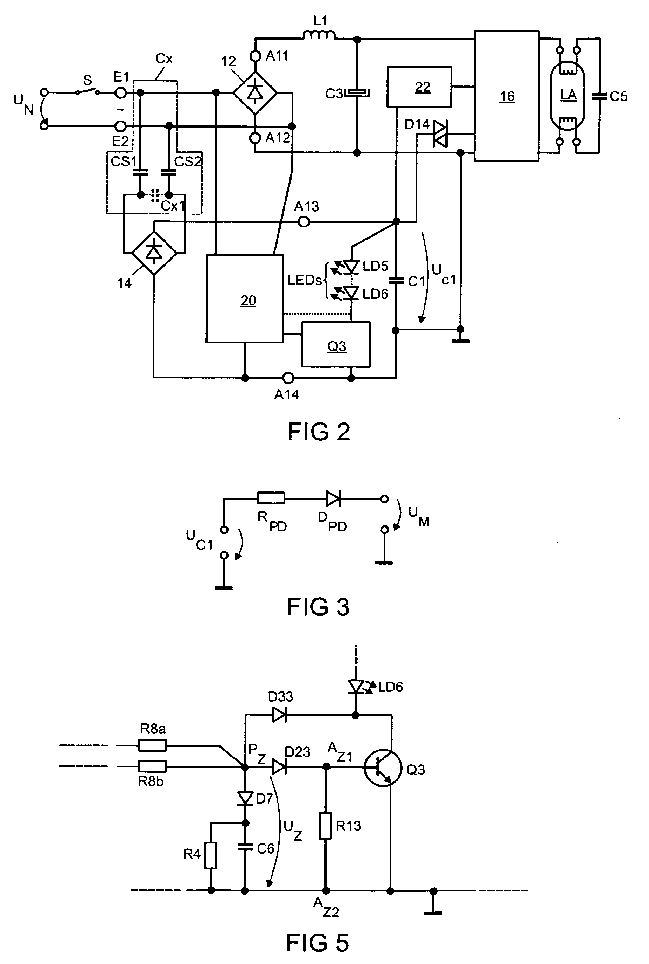

Fig. 2 zeigt in schematischer Darstellung den Aufbau einer erfindungsgemäßen Schaltungsanordnung. Die Eingangsanschlüsse E1, E2 sind über einen Schalter S mit einer Versorgungswechselspannung $U_N$, die insbesondere die Netzspannung darstellt, koppelbar.

Dabei sind die Eingangsanschlüsse E1 und E2 mit einem Hauptgleichrichter 12 gekoppelt. Der Eingangsanschluss E1 ist überdies über einen Kondensator $C_{S1}$ mit dem ersten Eingangsanschluss eines Hilfsgleichrichters 14, der zweite Eingangsanschluss E2 über einen zweiten Kondensator $C_{S2}$ mit dem zweiten Eingangsanschluss des Hilfsgleichrichters 14 gekoppelt. Zwischen die beiden Eingänge des Hilfsgleichrichters ist überdies eine X-Kapazität $C_{X1}$ gekoppelt. Die Kombination aus den Kondensatoren $C_{S1}$, $C_{S2}$ und $C_{X1}$ entspricht dem Kondensator $C_X$ von Fig. 1. Die Ausgangsspannung des Hauptgleichrichters 12 wird von einem Kondensator $C_3$ gestützt und an einen Wechselrichter 16 bereitgestellt. Der Ausgang des Wechselrichters ist mit einer Leuchtstofflampe LA gekoppelt, wobei ein Kondensator C5 als Zündkondensator vorgesehen ist. Die Eingangsanschlüsse E1, E2 des Hauptgleichrichters 12 sind überdies mit dem Eingang eines Zeitglieds 20 gekoppelt, dessen erster Ausgangsanschluss mit der Steuerelektrode des LED-Schalters Q3 und dessen zweiter Ausgangsanschluss mit der Bezugselektrode des LED-Schalters Q3 gekoppelt ist. Wie gestrichelt eingezeichnet ist, kann überdies eine Kopplung des Zeitglieds 20 mit der Arbeitselektrode des LED-Schalters Q3 vorgesehen sein. Zwischen die Ausgänge A13 und A14 des Hilfsgleichrichters 14 ist ein Startkondensator C1 gekoppelt, in dem eine Spannung $U_{C1}$ gespeichert ist. Parallel zum Startkondensator C1 ist die Serienschaltung mehrerer LEDs, wobei vorliegend die LEDS LD5 und LD6 beispielhaft dargestellt sind, sowie die Strecke Arbeitselektrode - Bezugselektrode des LED-Schalters Q3 gekoppelt. Die Spannung $U_{C1}$ liegt überdies an einem Anschluss des DIACs D14 an, dessen anderer Anschluss mit der Steuerelektrode eines Schalters des Wechselrichters 16 gekoppelt ist. Der Mittelpunkt des mindestens zwei nicht dargestellte Schalter umfassenden Wechselrichters 16 ist über eine Pull-Down-Schaltung 22 ebenfalls mit der Spannung $U_{C1}$ gekoppelt.

Fig. 3 zeigt ein Ausführungsbeispiel für die Pull-Down-Schaltung 22. Sie umfasst die Serienschaltung eines ohmschen Widerstands $R_{PD}$ sowie einer Diode $D_{PD}$. Diese Serienschaltung ist einerseits zwischen den Pluspol der Spannung $U_{C1}$ und den Mittelpunkt der Brückenschaltung des Wechselrichters gekoppelt, an der die Spannung $U_M$ anliegt.

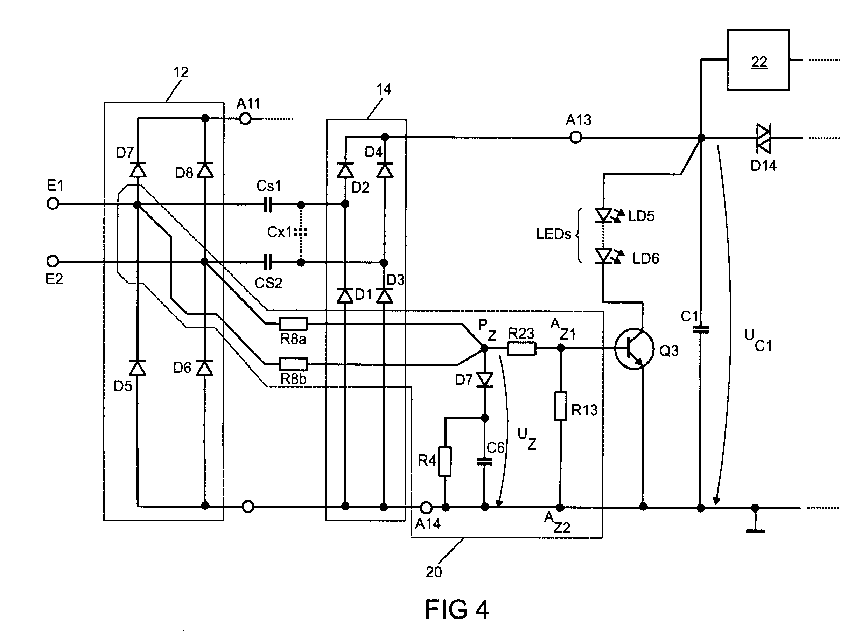

Fig. 4 zeigt in detaillierter Darstellung einen Ausschnitt der Schaltungsanordnung von Fig. 2. Gestrichelt eingezeichnet ist die Zeitsteuerung 20, deren einer Eingang mit dem Eingangsanschluss E1 und deren anderer Eingang mit dem Eingangsanschluss E2 gekoppelt ist. Zwischen dem jeweiligen Eingangsanschluss und einem Punkt $P_Z$ ist jeweils ein ohmscher Widerstand $R_{8a}$, $R_{8b}$ gekoppelt. Diese beiden ohmschen Widerstände dienen dazu, eine geeignete Ansteuerung des LED-Schalters Q3 sicherzustellen, unabhängig davon, in welcher Phase sich die Versorgungswechselspannung $U_N$ beim Einschalten gerade befindet. Die Spannung am Punkt $P_Z$ wird im Folgenden mit $U_Z$ bezeichnet.

Der Punkt $P_Z$ ist über eine Diode D7 und die Parallelschaltung eines ohmschen Widerstands R4 und eines Kondensators C6 mit dem Massepotential verbunden. Die Diode D7 stellt sicher, dass Ladungsträger nur über einen der Widerstände $R_{8a}$, $R_{8b}$ an die Steuerelektrode des LED-Schalters Q3 gelangen, d. h. insbesondere keine Ladungsträger vom Kondensator C6. Mit dem Punkt $P_Z$ ist weiterhin ein Spannungsteiler gekoppelt, der die Widerstände R23 und R13 umfasst, wobei der Abgriff des Spannungsteilers einen ersten Ausgangsanschluss $A_{Z1}$ der Zeitsteuerung 20 darstellt, der mit der Steuerelektrode des LED-Schalters Q3 gekoppelt ist. Der zweite Ausgangsanschluss $A_{Z2}$ der Zeitsteuerung 20 wird durch das Bezugspotential gebildet.

Fig. 5 zeigt eine alternative Ausführungsform der Zeitsteuerung 20. Hierbei ist zwischen dem Punkt $P_Z$ und dem ersten Ausgang $A_{Z1}$, der Zeitsteuerung 20 anstelle des ohmschen Widerstands R23 eine Diode D23 angeordnet. Der Punkt $P_Z$ ist überdies über eine Diode D33 mit der Arbeitselektrode, d. h. vorliegend dem Kollektor, des LED-Schalters Q3 gekoppelt. Die Diode D33 wirkt als Antisättigungsdiode für den LED-Schalter Q3. Dadurch wird sichergestellt, dass der LED-Schalter Q3 noch schneller ausschaltet, und im Gegenzug die Leuchtstofflampe LA noch sicherer angeht. Sie dient damit zur Stabilisierung des Ladungsvorsprungs des Startkondensators C1.

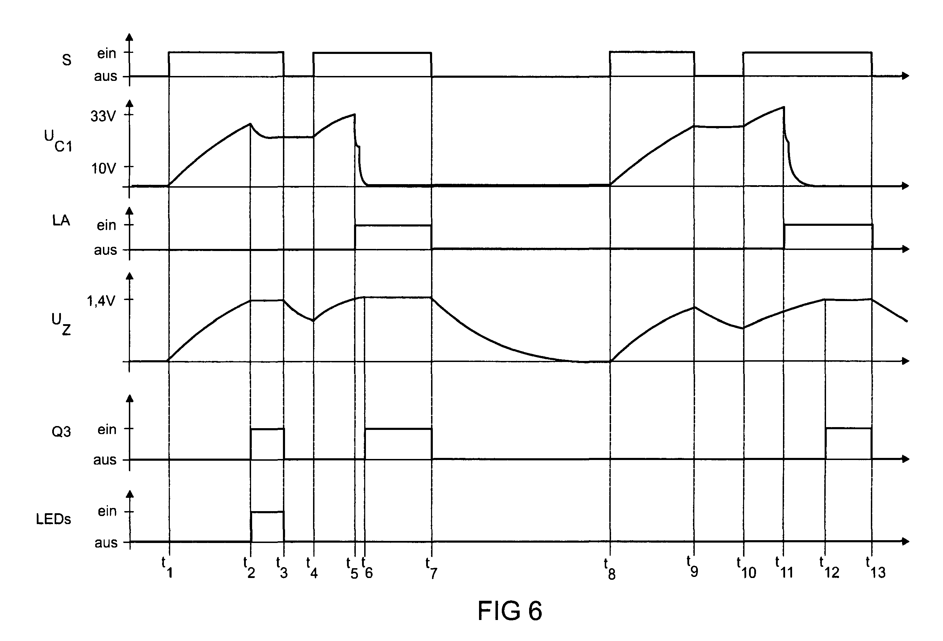

Fig. 6 zeigt den zeitlichen Verlauf mehrerer Größen einer erfindungsgemäßen Schaltungsanordnung, wobei innerhalb der Zeitsteuerung 20 die Variante mit der Antisättigungsdiode D33 verwendet wurde. Der oberste Verlauf betrifft die Stellung des Schalters S. Der zweite Verlauf zeigt die Spannung am Startkondensator C1, die der Spannung am DIAC D14 entspricht. Der dritte Verlauf betrifft die Leuchtstofflampe LA und zeigt deren Aus- bzw. An-Zustand. Der vierte Verlauf gibt die Spannung $U_Z$ am Punkt $P_Z$ wieder. Der fünfte Verlauf betrifft den Schaltzustand des LED-Schalters Q3 und der sechste Verlauf den Schaltzustand der LEDs LD5, LD6.

Zum Zeitpunkt $t_1$ wird der Schalter S1 eingeschaltet. Dadurch lädt sich der Kondensator C1 allmählich auf, die Spannung $U_{C1}$ steigt. In derselben Weise wird über einen der Widerstände $R_{8a}$, $R_{8b}$ und die Diode D7 der Kondensator C6 geladen, d. h. die Spannung $U_Z$ steigt ebenfalls an. Die Spannung $P_Z$ erreicht zum Zeitpunkt $t_2$ einen Wert, der dazu führt, dass der LED-Schalter Q3 einschaltet. Infolge dessen, dass die Spannung $U_{C1}$, die die Serienschaltung der LEDs und der Strecke Arbeitselektrode - Bezugselektrode des LED-Schalters Q3 versorgt, ausreichend hoch ist, werden dadurch die LEDs eingeschaltet. Durch die Versorgung der LEDs geht die Spannung $U_{C1}$ geringfügig zurück. Wichtig ist, dass schon zum Zeitpunkt $t_2$ die Spannung $U_{C1}$ kleiner als die Zündspannung des DIACS D14 ist. Wird zum Zeitpunkt $t_3$ der Schalter S ausgeschaltet, wird dadurch auch der LED-Schalter Q3 ausgeschaltet. Dadurch ist ein Stromfluss durch die LEDs nicht mehr möglich; diese werden daher ebenfalls ausgeschaltet.

Von Bedeutung ist, dass bis zum Zeitpunkt $t_4$ die Spannung $U_{C1}$ am Startkondensator C1 mangels der Parallelschaltung eines ohmschen Widerstands und bevorzugt durch schnelle Abschaltung der LEDs mittels des LED-Schalters nahezu konstant bleibt. Die Spannung $U_Z$ sinkt hingegen ab, da sich der Zeitgliedkondensator C6 über den ohmschen Widerstand R4 entlädt. Wird nun zum Zeitpunkt $t_4$ der Schalter S wieder eingeschaltet, weist der Startkondensator C1 einen Ladungsvorsprung gegenüber dem Zeitgliedkondensator C6 auf. Die Spannung $U_{C1}$ steigt wiederum, ebenso wie die Spannung $U_Z$. Zum Zeitpunkt $t_5$ ist die Spannung $U_{C1}$, die gleich der am DIAC D14 anliegenden Spannung ist, so groß, dass der DIAC zündet. Dadurch bricht die Spannung $U_{C1}$ zunächst um ungefähr ein Drittel ihres Spitzenwerts ein; der Wechselrichter 16 wird in Gang gesetzt und die Leuchtstofflampe LA wird eingeschaltet. Gleichzeitig tritt besagte Pull-Down-Schaltung in Aktion und erledigt die Entladung des Startkondensators C1 auf annähernd Null Volt. Wenngleich zum Zeitpunkt $t_6$ die Spannung $U_Z$ wieder einen Wert erreicht hat, der ausreichend ist, den LED-Schalter Q3 einzuschalten, so bleiben die LEDs dennoch aus, da infolge des Einbruchs der Spannung $U_{C1}$ keine Versorgung für die LEDs zur Verfügung steht. Wird zum Zeitpunkt $t_7$ der Schalter S wieder ausgeschaltet, werden dadurch die Leuchtstofflampe LA und der LED-Schalter Q3 ausgeschaltet.

Während der Ablauf zwischen den Zeiträumen $t_1$ und $t_7$ einen Vorgang zeigt, bei dem zunächst die LEDs eingeschaltet wurden und anschließend die Leuchtstofflampe LA, zeigt der Verlauf zwischen den Zeitpunkten $t_8$ und $t_{13}$, wie erreicht werden kann, dass ohne ein vorhergehendes Einschalten der LEDs LD5, LD6 allein die Leuchtstofflampe LA eingeschaltet werden kann. Dazu wird zum Zeitpunkt $t_8$ der Schalter S eingeschaltet. Infolge dessen steigt die Spannung $U_{C1}$ und die Spannung $U_Z$ an. Wird nunmehr bereits zum Zeitpunkt t9 ausgeschaltet, d. h. zu einem Zeitpunkt zu dem die Spannung $U_Z$ noch nicht ausreicht, um den LED-Schalter Q3 leitend zu schalten, bleiben zunächst sowohl die Leuchtstofflampe LA als auch die LEDs aus. Zwischen den Zeitpunkten $t_9$ und $t_{10}$ bleibt die Spannung $U_{C1}$ am Startkondensator C1 im Wesentlichen konstant, während die Spannung $U_Z$ infolge dessen, dass sich der Zeitkondensator C6 über den ohmschen Widerstand R4 entlädt, absinkt. Wird zum Zeitpunkt $t_{10}$ der Schalter S wieder eingeschaltet, steigen sowohl die Spannung $U_{C1}$ als auch die Spannung $U_Z$ an. Infolge des Ladungsvorsprungs des Startkondensators C1 wird nunmehr zum Zeitpunkt $t_{11}$ eine Spannung $U_{C1}$ erreicht, die ausreichend ist, den DIAC zu zünden. Dadurch wird der Wechselrichter 16 in Betrieb gesetzt, die Leuchtstofflampe LA wird eingeschaltet. Zwar wächst bis zum Zeitpunkt $t_{12}$ die Spannung $U_Z$ ebenfalls soweit an, dass der LED-Schalter Q3 einschaltet wird, jedoch bleiben die LEDs aus, da die die LEDs versorgende Spannung $U_{C1}$ durch die Aktion der Pull-Down-Schaltung auf nahezu Null Volt abgesunken ist. Zum Zeitpunkt $t_{13}$ wird der Schalter S wieder ausgeschaltet, wodurch auch die Leuchtstofflampe und der LED-Schalter Q3 wieder ausgeschaltet werden.

**Patentansprüche**

1. Schaltungsanordnung zum Betreiben mindestens einer LED (LD5, LD6) und mindestens einer Leuchtstofflampe (LA) mit

- einem Eingang mit einem ersten (E1) und einem zweiten Eingangsanschluss (E2) zum Anschließen einer Versorgungswechselspannung ($U_N$);
- einem Hauptgleichrichter (12), der einen ersten und einen zweiten Eingangsanschluss und einen ersten (A11) und einen zweiten Ausgangsanschluss (A12) aufweist, wobei der erste und der zweite Eingangsanschluss des Hauptgleichrichters (12) mit dem ersten (E1) und dem zweiten Eingangsanschluss (E2) zum Anschließen der Versorgungswechselspannung ($U_N$) gekoppelt sind;
- einem Hilfsgleichrichter (14), der einen ersten und einen zweiten Eingangsanschluss und einen ersten (A13) und einen zweiten Ausgangsanschluss (A14) aufweist, wobei der erste und der zweite Eingangsanschluss des Hilfsgleichrichters (14) mit dem ersten (E1) und dem zweiten Eingangsanschluss (E2) zum Anschließen der Versorgungswechselspannung ($U_N$) gekoppelt sind;
- einem Wechselrichter (16), der mindestens eine Serienschaltung aus einem ersten (Q1) und einem zweiten Schalter (Q2) umfasst, wobei die Serienschaltung mit dem ersten (A11) und dem zweiten Ausgangsanschluss (A12) des Hauptgleichrichters (12) gekoppelt ist und dessen Ausgang mindestens einen Anschluss zum Anschließen der Leuchtstofflampe (LA) aufweist, wobei der erste und der zweite Schalter jeweils eine Steuerelektrode, eine Arbeitselektrode und eine Bezugselektrode aufweisen;
- einer Startvorrichtung (D14) mit einem ersten und einem zweiten Anschluss, wobei ihr erster Anschluss mit einer Steuerelektrode eines der Schalter des Wechselrichters (16) gekoppelt ist;
- einer Pull-Down-Schaltung (22) mit einem ersten und einem zweiten Anschluss, wobei ihr erster Anschluss mit dem Ausgang des Wechselrichters (16) gekoppelt ist; und
- einem Startkondensator (C1) zum Bereitstellen von Energie für die Startvorrichtung (D14);

**dadurch gekennzeichnet,**
**dass** der zweite Anschluss der Startvorrichtung (D14) und der zweite Anschluss der Pull-Down-Schaltung (22) mit dem ersten Ausgangsanschluss (A13) des Hilfsgleichrichters (14) gekoppelt sind;
**dass** der Startkondensator (C1) zwischen den ersten (A13) und den zweiten Ausgangsanschluss (A14) des Hilfsgleichrichters (14) gekoppelt ist; und
**dass** parallel zum Startkondensator (C1) eine Serienschaltung angeordnet ist, die einen ersten und einen zweiten Anschluss für die mindestens eine LED (D5; D6) und einen LED-Schalter (Q3) umfasst, wobei der LED-Schalter (Q3) eine Steuerelektrode, eine Arbeitselektrode und eine Bezugselektrode aufweist.

2. Schaltungsanordnung nach Anspruch 1,
**dadurch gekennzeichnet,**
**dass** sie weiterhin ein Zeitglied (20) umfasst, dessen Eingang mit dem ersten (E1) und/oder dem zweiten Eingangsanschluss (E2) des Eingangs gekoppelt ist, und dessen erster Ausgangsanschluss ($A_{Z1}$) mit der Steuerelektrode des LED-Schalters (Q3) gekoppelt ist, und dessen zweiter Ausgangsanschluss ($A_{Z2}$) mit der Bezugselektrode des LED-Schalters (Q3) gekoppelt ist.

3. Schaltungsanordnung nach Anspruch 2,
**dadurch gekennzeichnet,**
**dass** das Zeitglied (20) zwischen seinem ersten ($A_{Z1}$) und seinem zweiten Ausgangsanschluss ($A_{Z2}$) die Parallelschaltung eines Zeitgliedkondensators (C6) und eines ersten ohmschen Widerstands (R4) umfasst, wobei das Zeitglied (20) weiterhin einen zweiten ohmschen Widerstand ($R_{8b}$) umfasst, der zwischen den Eingang des Zeitglieds und seinen ersten Ausgangsanschluss ($A_{Z1}$) gekoppelt ist, wobei die an der Parallelschaltung abfallende Spannung mit dem Ausgang ($A_{Z1}$, $A_{Z2}$) des Zeitglieds (20) gekoppelt ist.

4. Schaltungsanordnung nach Anspruch 3,
**dadurch gekennzeichnet,**
**dass** das Zeitglied (20) weiterhin einen dritten ohmschen Widerstand ($R_{8a}$) umfasst, wobei der zweite ohmsche Widerstand ($R_{8b}$) zwischen den ersten Eingangsanschluss (E1) des Eingangs und den ersten Ausgangsanschluss ($A_{Z1}$) des Zeitglieds (20) gekoppelt ist, und wobei der dritte ohmsche Widerstand ($R_{8a}$) zwischen den zweiten Eingangsanschluss (E2) des Eingangs und den ersten Ausgangsanschluss ($A_{Z1}$) des Zeitglieds (20) gekoppelt ist.

5. Schaltungsanordnung nach einem der Ansprüche 2 bis 4,
**dadurch gekennzeichnet,**
**dass** zwischen den beiden Ausgangsanschlüssen ($A_{Z1}$, $A_{Z2}$) des Zeitglieds eine erste Diode (D7) gekoppelt ist, die so orientiert ist, dass sie einen Stromfluss vom Zeitgliedkondensator (C6) zum ersten Ausgangsanschluss ($A_{Z1}$) des Zeitglieds verhindert.

**6.** Schaltungsanordnung nach einem der Ansprüche 2 bis 5,
**dadurch gekennzeichnet,**
**dass** zwischen die beiden Ausgangsanschlüsse ($A_{Z1}$, $A_{Z2}$) des Zeitglieds (20) ein ohmscher Spannungsteiler ($R_{23}$, $R_{13}$) gekoppelt ist, dessen Abgriff mit der Steuerelektrode des LED-Schalters (Q3) gekoppelt ist.

**7.** Schaltungsanordnung nach Anspruch 6,
**dadurch gekennzeichnet,**
**dass** der Teil ($R_{23}$) des Spannungsteilers ($R_{12}$, $R_{23}$), der zwischen den ersten Ausgangsanschluss ($A_{Z1}$) des Zeitglieds (20) und die Steuerelektrode des LED-Schalters (Q3) gekoppelt ist, eine zweite Diode (D23) umfasst, die so orientiert ist, dass sie einen Stromfluss von der Steuerelektrode des LED-Schalters (Q3) zum Ausgang ($P_Z$) des Zeitglieds (20) verhindert.

**8.** Schaltungsanordnung nach einem der Ansprüche 2 bis 7,
**dadurch gekennzeichnet,**
**dass** sie weiterhin eine elektrische Kopplung zwischen der Arbeitselektrode des LED-Schalters (Q3) und dem ersten Ausgangsanschluss ($A_{Z1}$) des Zeitglieds (20) umfasst, die derart ausgebildet ist, dass sie eine Stromgegenkopplung des LED-Schalters (Q3) bewirkt.

**9.** Schaltungsanordnung nach einem der Ansprüche 7 oder 8,
**dadurch gekennzeichnet,**
**dass** die Arbeitselektrode des LED-Schalters (Q3) mit dem ersten Ausgangsanschluss ($P_Z$) des Zeitglieds (20) über eine dritte Diode (D33) gekoppelt ist, die derart orientiert ist, dass sie als Antisättigungsdiode für den LED-Schalter (Q3) wirkt.

**10.** Schaltungsanordnung nach einem der Ansprüche 2 bis 9,
**dadurch gekennzeichnet,**
**dass** das Zeitglied (20) und der Startkondensator (C1), ausgehend von einem Ladezustand des Startkondensators (C1) unter einem vorgebbaren Grenzwert, ausgelegt sind, nach einem Anlegen der Versorgungswechselspannung ($U_N$) an die Schaltungsanordnung den LED-Schalter (Q3) einzuschalten, bevor am Startkondensator (C1) eine zur Triggerung der Startvorrichtung (D14) ausreichende Spannung anliegt.

**11.** Schaltungsanordnung nach einem der Ansprüche 2 bis 10,
**dadurch gekennzeichnet,**
**dass** das Zeitglied (20) und der Startkondensator (C1), ausgehend von einem Ladezustand des Startkondensators (C1) über einem vorgebbaren Grenzwert, ausgelegt sind, nach einem Anlegen der Versorgungswechselspannung ($U_N$) die Startvorrichtung zu triggern, bevor an der Steuerelektrode des LED-Schalters (Q3) eine zum Einschalten des LED-Schalters (Q3) ausreichende Spannung anliegt.

**12.** Schaltungsanordnung nach einem der vorhergehenden Ansprüche,
**dadurch gekennzeichnet,**
**dass** die Pull-Down-Schaltung (22) die Serienschaltung eines ohmschen Widerstands ($R_{PD}$) und einer Diode ($D_{PD}$) umfasst.

**13.** Schaltungsanordnung nach einem der vorhergehenden Ansprüche,
**dadurch gekennzeichnet,**
**dass** zwischen den ersten Eingangsanschluss (E1) des Eingangs und den ersten Eingangsanschluss des Hilfsgleichrichters (14) ein erster Kondensator ($C_{S1}$) und zwischen den zweiten Eingangsanschluss (E2) des Eingangs und den zweiten Eingangsanschluss des Hilfsgleichrichters (14) ein zweiter Kondensator ($C_{S2}$) gekoppelt ist.

**14.** Schaltungsanordnung nach Anspruch 13,
**dadurch gekennzeichnet,**
**dass** zwischen den ersten Eingangsanschluss und den zweiten Eingangsanschluss des Hilfsgleichrichters (14) ein dritter Kondensator ($C_{X1}$) gekoppelt ist.

**15.** Schaltungsanordnung nach einem der vorhergehenden Ansprüche,
**dadurch gekennzeichnet,**
**dass** der Hilfsgleichrichter (14) dimensioniert ist eine Spannung an seinem Ausgang bereitzustellen, die maximal 110 % der Triggerspannung der Startvorrichtung (D14), insbesondere maximal 35 V, entspricht.

**16.** Verfahren zum Betreiben mindestens einer LED (LD5, LD6) und mindestens einer Leuchtstofflampe (LA) an einer Schaltungsanordnung mit einem Eingang mit einem ersten (E1) und einem zweiten Eingangsanschluss (E2) zum Anschließen einer Versorgungswechselspannung ($U_N$); einem Hauptgleichrichter (12), der einen ersten und einen zweiten Eingangsanschluss und einen ersten (A11) und einen zweiten Ausgangsanschluss (A12) aufweist, wobei der erste und der zweite Eingangsanschluss des Hauptgleichrichters (12) mit dem ersten (E1) und dem zweiten Eingangsanschluss (E2) zum Anschließen der Versorgungswechselspannung ($U_N$) gekoppelt sind; einem Hilfsgleichrichter (14), der einen ersten und einen zweiten Eingangsanschluss und einen ersten (A13) und einen zweiten Ausgangsanschluss (A14) aufweist, wobei der erste und der zweite Eingangsanschluss des Hilfsgleichrichters (14) mit dem ersten (E1) und dem zweiten Eingangsanschluss (E2) zum Anschließen der Versorgungswechselspannung (U$_N$) gekoppelt sind; einem
Wechselrichter (16), der mindestens eine Serienschaltung aus einem ersten (Q1) und einem zweiten
Schalter (Q2) umfasst, wobei die Serienschaltung
mit dem ersten (A11) und dem zweiten Ausgangsanschluss (A12) des Hauptgleichrichters (12) gekoppelt ist und dessen Ausgang mindestens einen
Anschluss zum Anschließen der Leuchtstofflampe
(LA) aufweist, wobei der erste und der zweite Schalter jeweils eine Steuerelektrode, eine Arbeitselektrode und eine Bezugselektrode aufweisen; einer Startvorrichtung (D14) mit einem ersten und einem zweiten Anschluss, wobei ihr erster Anschluss mit einer
Steuerelektrode eines der Schalter des Wechselrichters gekoppelt ist; einer Pull-Down-Schaltung
(22) mit einem ersten und einem zweiten Anschluss,
wobei ihr erster Anschluss mit dem Ausgang des
Wechselrichters (16) gekoppelt ist; einem Startkondensator (C1) zum Bereitstellen von Energie für die
Startvorrichtung (D14); wobei der zweite Anschluss
der Startvorrichtung (D14) und der zweite Anschluss
der Pull-Down-Schaltung (22) mit dem ersten Ausgangsanschluss (A13) des Hilfsgleichrichters (14)
gekoppelt sind; wobei der Startkondensator (C1)
zwischen den ersten (A13) und den zweiten Ausgangsanschluss (A14) des Hilfsgleichrichters (14)
gekoppelt ist; und wobei parallel zum Startkondensator (C1) eine Serienschaltung angeordnet ist, die
einen ersten und einen zweiten Anschluss für die
mindestens eine LED (LD5, LD6) und einen LED-
Schalter (Q3) umfasst, wobei der LED-Schalter (Q3)
eine Steuerelektrode, eine Arbeitselektrode und eine Bezugselektrode aufweist, und einem Zeitglied
(20), das einen Zeitgliedkondensator (C6) aufweist;
folgende Schritte nach dem Anlegen der Versorgungswechselspannung (U$_N$) umfassend:

a1) Laden des Zeitgliedkondensators (C6) und
des Startkondensators (C1);
a2) Koppeln der am Zeitgliedkondensator (C6)
abfallenden Spannung (U$_Z$) an die Steuerelektrode des LED-Schalters (Q3);
a3) Koppeln der am Startkondensator (C1) abfallenden Spannung (U$_{C1}$) an die Startvorrichtung (D14);

**gekennzeichnet durch** folgende in Abhängigkeit
des Ladezustands des Startkondensators (C1) auszuführenden Schritte:

b1) falls der Ladezustand des Startkondensators (C1) vor dem Anlegen der Versorgungswechselspannung (U$_N$) unter einem vorgebbaren Grenzwert war:

Einschalten des LED-Schalters (Q3) und
damit Einschalten der mindestens einen LED (LD5, LD6) ohne Triggerung der Startvorrichtung (D14);

b2) falls der Ladezustand des Startkondensators (C1) vor dem Anlegen der Versorgungswechselspannung (U$_N$) über einem vorgebbaren Grenzwert war:

Triggern der Startvorrichtung (D14) und damit Einschalten der Leuchtstofflampe (LA)
bei ausgeschaltetem LED-Schalter (Q3)
und damit ausgeschalteter mindestens einer LED (D5; D6).

**Claims**

1. Circuit arrangement for operating at least one LED
(LD5, LD6) and at least one fluorescent lamp (LA)
comprising

- an input having a first (E1) and a second input
terminal (E2) for connecting an AC supply voltage (U$_N$);
- a main rectifier (12) having a first and a second
input terminal and a first (A11) and a second
output terminal (A12), wherein the first and the
second input terminal of the main rectifier (12)
are coupled to the first (E1) and the second input
terminal (E2) for connecting the AC supply voltage (U$_N$);
- an auxiliary rectifier (14) having a first and a
second input terminal and a first (A13) and a
second output terminal (A14), wherein the first
and the second input terminal of the auxiliary
rectifier (14) are coupled to the first (E1) and the
second input terminal (E2) for connecting the
AC supply voltage (U$_N$);
- an inverter (16) comprising at least one series
circuit formed by a first (Q1) and a second switch
(Q2) wherein the series circuit is coupled to the
first (A11) and the second output terminal (A12)
of the main rectifier (12), and the output of said
inverter having at least one terminal for connecting the fluorescent lamp (LA), wherein the first
and the second switch each have a control electrode, an operating electrode and a reference
electrode;
- a starting device (D14) having a first and a second terminal, wherein its first terminal is coupled
to a control electrode of one of the switches of
the inverter (16);
- a pull-down circuit (22) having a first and a
second terminal, wherein its first terminal is coupled to the output of the inverter (16); and
- a starting capacitor (C1) for providing energy
for the starting device (D14);

**characterized**

**in that** the second terminal of the starting device (D14) and the second terminal of the pull-down circuit (22) are coupled to the first output terminal (A13) of the auxiliary rectifier (14);

**in that** the starting capacitor (C1) is coupled between the first (A13) and the second output terminal (A14) of the auxiliary rectifier (14); and

**in that** there is arranged in parallel with the starting capacitor (C1) a series circuit comprising a first and a second terminal for the at least one LED (D5; D6) and an LED switch (Q3), wherein the LED switch (Q3) has a control electrode, an operating electrode and a reference electrode.

2. Circuit arrangement according to Claim 1,
**characterized**
**in that** it furthermore comprises a timer (20), the input of which is coupled to the first (E1) and/or the second input terminal (E2) of the input, and the first output terminal ($A_{Z1}$) of which is coupled to the control electrode of the LED switch (Q3), and the second output terminal ($A_{Z2}$) of which is coupled to the reference electrode of the LED switch (Q3).

3. Circuit arrangement according to Claim 2,
**characterized**
**in that** the timer (20) comprises, between its first ($A_{Z1}$) and its second output terminal ($A_{Z2}$), the parallel circuit formed by a timer capacitor (C6) and a first nonreactive resistor (R4), wherein the timer (20) furthermore comprises a second nonreactive resistor ($R_{8b}$), which is coupled between the input of the timer and its first output terminal ($A_{Z1}$) wherein the voltage dropped across the parallel circuit is coupled to the output ($A_{Z1}$, $A_{Z2}$) of the timer (20).

4. Circuit arrangement according to Claim 3,
**characterized**
**in that** the timer (20) furthermore comprises a third nonreactive resistor ($R_{8a}$), wherein the second nonreactive resistor ($R_{8b}$) is coupled between the first input terminal (E1) of the input and the first output terminal ($A_{Z1}$) of the timer (20) and wherein the third nonreactive resistor ($R_{8a}$) is coupled between the second input terminal (E2) of the input and the first output terminal ($A_{Z1}$) of the timer (20).

5. Circuit arrangement according to any of Claims 2 to 4,
**characterized**
**in that** a first diode (D7) is coupled between the two output terminals ($A_{Z1}$, $A_{Z2}$) of the timer, said diode being oriented in such a way that it prevents a current flow from the timer capacitor (C6) to the first output terminal ($A_{Z1}$) of the timer.

6. Circuit arrangement according to any of Claims 2 to 5,
**characterized**
**in that** a resistive voltage divider ($R_{23}$, $R_{13}$) is coupled between the two output terminals ($A_{Z1}$, $A_{Z2}$) of the timer (20), the tap of said voltage divider being coupled to the control electrode of the LED switch (Q3).

7. Circuit arrangement according to Claim 6,
**characterized**
**in that** the part ($R_{23}$) of the voltage divider ($R_{12}$, $R_{23}$) which is coupled between the first output terminal ($A_{Z1}$) of the timer (20) and the control electrode of the LED switch (Q3) comprises a second diode (D23) which is oriented in such a way that it prevents a current flow from the control electrode of the LED switch (Q3) to the output ($P_Z$) of the timer (20) .

8. Circuit arrangement according to any of Claims 2 to 7,
**characterized**
**in that** it furthermore comprises an electrical coupling between the operating electrode of the LED switch (Q3) and the first output terminal ($A_{Z1}$) of the timer (20), which electrical coupling is embodied in such a way that it brings about current negative feedback of the LED switch (Q3).

9. Circuit arrangement according to either of Claims 7 and 8,
**characterized**
**in that** the operating electrode of the LED switch (Q3) is coupled to the first output terminal ($P_Z$) of the timer (20) via a third diode (D33) which is oriented in such a way that it acts as an antisaturation diode for the LED switch (Q3).

10. Circuit arrangement according to any of Claims 2 to 9,
**characterized**
**in that** the timer (20) and the starting capacitor (C1), proceeding from a charge state of the starting capacitor (C1) below a predefineable limit value, are designed, after the AC supply voltage ($U_N$) has been applied to the circuit arrangement, to switch on the LED switch (Q3) before a voltage sufficient for triggering the starting device (D14) is present at the starting capacitor (C1).

11. Circuit arrangement according to any of Claims 2 to 10,
**characterized**
**in that** the timer (20) and the starting capacitor (C1), proceeding from a charge state of the starting capacitor (C1) above a predefineable limit value, are designed, after the AC supply voltage ($U_N$) has been applied, to trigger the starting device before a voltage sufficient for switching on the LED switch (Q3) is present at the control electrode of the LED switch (Q3).

12. Circuit arrangement according to any of the preceding claims,
**characterized**
**in that** the pull-down circuit (22) comprises the series circuit formed by a nonreactive resistor ($R_{PD}$) and a diode ($D_{PD}$).

13. Circuit arrangement according to any of the preceding claims,
**characterized**
**in that** a first capacitor ($C_{S1}$) is coupled between the first input terminal (E1) of the input and the first input terminal of the auxiliary rectifier (14) and a second capacitor ($C_{S2}$) is coupled between the second input terminal (E2) of the input and the second input terminal of the auxiliary recitifier (14).

14. Circuit arrangement according to Claim 13,
**characterized**
**in that** a third capacitor ($C_{X1}$) is coupled between the first input terminal and the second input terminal of the auxiliary rectifier (14).

15. Circuit arrangement according to any of the preceding claims,
**characterized**
**in that** the auxiliary rectifier (14) is dimensioned to provide a voltage at its output which corresponds to at most 110% of the trigger voltage of the starting device (D14) in particular at most 35 V.

16. Method for operating at least one LED, (LD5, LD6) and at least one fluorescent lamp (LA) using a circuit arrangement comprising an input having a first (E1) and a second input terminal (E2) for connecting an AC supply voltage ($U_N$) ; a main rectifier (12) having a first and a second input terminal and a first (A11) and a second output terminal (A12), wherein the first and the second input terminal of the main rectifier (12) are coupled to the first (E1) and the second input terminal (E2) for connecting the AC supply voltage ($U_N$); an auxiliary rectifier (14) having a first and a second input terminal and a first (A13) and a second output terminal (A14), wherein the first and the second input terminal of the auxiliary rectifier (14) are coupled to the first (E1) and the second input terminal (E2) for connecting the AC supply voltage ($U_N$); an inverter (16) comprising at least one series circuit formed by a first (Q1) and a second switch (Q2), wherein the series circuit is coupled to the first (A11) and the second output terminal (A12) of the main rectifier (12), and the output of said inverter having at least one terminal for connecting the fluorescent lamp (LA), wherein the first and the second switch each have a control electrode, an operating electrode and a reference electrode; a starting device (D14) having a first and a second terminal, wherein its first terminal is coupled to a control electrode of one of the switches of the inverter; a pull-down circuit (22) having a first and a second terminal, wherein its first terminal is coupled to the output of the inverter (16); a starting capacitor (C1) for providing energy for the starting device (D14); wherein the second terminal of the starting device (D14) and the second terminal of the pull-down circuit (22) are coupled to the first output terminal (A13) of the auxiliary rectifier (14); wherein the starting capacitor (C1) is coupled between the first (A13) and the second output terminal (A14) of the auxiliary rectifier (14); and wherein there is arranged in parallel with the starting capacitor (C1) a series circuit comprising a first and a second terminal for the at least one LED (LD5; LD6) and an LED switch (Q3), wherein the LED switch (Q3) has a control electrode, an operating electrode and a reference electrode, and a timer (20) having a timer capacitor (C6);
comprising the following steps
after the AC supply voltage ($U_N$) has been applied:

a1) charging the timer capacitor (C6) and the starting capacitor (C1);
a2) coupling the voltage ($U_Z$) dropped across the timer capacitor (C6) to the control electrode of the LED switch (Q3);
a3) coupling the voltage ($U_{C1}$) dropped across the starting capacitor (C1) to the starting device (D14);

**characterized by** the following steps to be performed depending on the charge state of the starting capacitor (C1):

b1) if the charge state of the starting capacitor (C1) before AC supply voltage ($U_N$) was applied was below a predefineable limit value:

switching on the LED switch (Q3) and thus switching on the at least one LED (LD5, LD6) without triggering the starting device (D14);

b2) if the charge state of the starting capacitor (C1) before the AC supply voltage ($U_N$) was applied was above a predefineable limit value:

triggering the starting device (D14) and thus switching on the fluorescent lamp (LA) with LED switch (Q3) switched off and thus at least one LED (D5, D6) switched off.

## Revendications

1. Montage pour faire fonctionner au moins une DEL ( LD5, LD6 ) et au moins une lampe ( LA ) fluorescente, comprenant

   - une entrée ayant une première borne ( E1 ) d'entrée et une deuxième borne ( E2 ) d'entrée pour l'application d'une tension ( UN ) alternative d'alimentation,
   - un redresseur ( 12 ) principal qui a une première et une deuxième borne d'entrée et une première borne ( A11 ) de sortie et une deuxième borne ( A12 ) de sortie, la première et la deuxième borne d'entrée du redresseur ( 12 ) principal étant reliées à la première borne ( E1 ) d'entrée et à la deuxième borne ( E2 ) d'entrée pour l'application de la tension ( UN ) alternative d'alimentation,
   - un redresseur ( 14 ) auxiliaire qui a une première et une deuxième borne d'entrée et une première borne ( A13 ) de sortie et une deuxième borne ( A14 ) de sortie, la première et la deuxième borne d'entrée du redresseur ( 14 ) auxiliaire étant reliées à la première borne ( E1 ) d'entrée et à la deuxième borne ( E2 ) d'entrée pour l'application de la tension ( UN ) alternative d'alimentation,
   - un onduleur ( 16 ) qui comprend au moins un circuit série constitué d'un premier commutateur ( Q1 ) et d'un deuxième commutateur ( Q2 ), le circuit série étant relié à la première borne ( A11 ) de sortie et à la deuxième borne ( A12 ) de sortie du redresseur ( 12 ) principal et sa sortie ayant au moins une borne de connexion de la lampe ( LA ) fluorescente, le premier et le deuxième commutateur ayant respectivement une électrode de commande, une électrode de travail et une électrode de référence ;
   - un dispositif ( D14 ) d'amorçage ayant une première et une deuxième borne, sa première borne étant reliée à une électrode de commande de l'un des commutateurs de l'onduleur ( 16 ) ;
   - un circuit ( 22 ) pull-down ayant une première et une deuxième borne, sa première borne étant reliée à la sortie de l'onduleur ( 16 ) ; et
   - un condenseur ( C1 ) d'amorçage pour mettre de l'énergie à disposition des dispositifs ( D14 ) d'amorçage ;

   **caractérisé**
   **en ce que** la deuxième borne du dispositif ( D14 ) d'amorçage et la deuxième borne du circuit ( 22 ) pull-down sont reliées à la première borne ( A13 ) de sortie du redresseur ( 14 ) auxiliaire ;
   **en ce que** le condensateur ( C1 ) d'amorçage est monté entre la première borne ( A13 ) de sortie et la deuxième borne ( A14 ) de sortie du redresseur ( 14 ) auxiliaire ; et
   **en ce qu'**en parallèle au condensateur ( C1 ) d'amorçage est monté un circuit série qui comprend une première et une deuxième borne pour la au moins une DEL ( D5 ; D6 ) et un commutateur ( Q3 ) de DEL, le commutateur ( Q3 ) de DEL ayant une électrode de commande, une électrode de travail et une électrode de référence.

2. Montage suivant la revendication 1, **caractérisé en ce qu'**il comprend en outre un élément ( 20 ) temporisateur, dont l'entrée est reliée à la première borne ( E1 ) et/ou à la deuxième borne ( E2 ) d'entrée de l'entrée, et dont la première borne ( AZ1 ) de sortie est reliée à l'électrode de commande du commutateur ( Q3 ) de DEL et dont la deuxième borne ( Az2 ) de sortie est reliée à l'électrode de référence du commutateur ( Q3 ) de DEL.

3. Montage suivant la revendication 2, **caractérisé en ce que** l'élément ( 20 ) temporisateur comprend, entre sa première borne ( AZ1 ) de sortie et sa deuxième borne ( AZ2 ) de sortie, le circuit en parallèle d'un condensateur ( C6 ) d'élément temporisateur et d'une première résistance ( R4 ) ohmique, l'élément ( 20 ) temporisateur comprenant en outre une deuxième résistance ( R8b ) ohmique qui est montée entre l'entrée de l'élément temporisateur et sa première borne ( AZ1 ) de sortie, la tension chutant aux bornes du circuit parallèle étant appliqué à la sortie ( AZ1, AZ2 ) de l'élément ( 20 ) temporisateur.

4. Montage suivant la revendication 3 **caractérisé en ce que** l'élément ( 20 ) temporisateur comprend en outre une troisième résistance ( R8a ) ohmique, la deuxième résistance ( R8b ) ohmique étant montée entre la première borne ( E1 ) d'entrée de l'entrée et la première borne ( AZ1 ) de sortie de l'élément ( 20 ) temporisateur et la troisième résistance ( R8a ) ohmique étant montée entre la deuxième borne ( E2 ) d'entrée de l'entrée et la première borne ( AZ1 ) de sortie de l'élément ( 20 ) temporisateur.

5. Montage suivant l'une des revendications 2 à 4, **caractérisé en ce qu'**entre les deux bornes ( AZ1, AZ2 ) de sortie de l'élément temporisateur est montée une première diode ( D7 ) qui est orientée de manière à empêcher un flux de courant allant du condensateur ( C6 ) de l'élément temporisateur à la première borne ( AZ1 ) de sortie de l'élément temporisateur.

6. Montage suivant l'une des revendications 2 à 5, **caractérisé en ce qu'**entre les deux bornes ( AZ1, AZ2 ) de sortie de l'élément ( 20 ) temporisateur est monté un diviseur ( R13, R23 ) ohmique de tension, dont la prise est reliée à l'électrode de commande du commutateur ( Q3 ) de DEL.

7. Montage suivant la revendication 6,
**caractérisé en ce que** la partie ( R23 ) du diviseur ( R12, R23 ) de tension, qui est montée entre la première borne ( AZ1 ) de sortie de l'élément ( 20 ) temporisateur et l'électrode de commande du commutateur ( Q3 ) de DEL, comprend une deuxième diode ( D23 ) qui est orientée de manière à empêcher un flux de courant allant de l'électrode de commande du commutateur ( Q3 ) de DEL à la sortie ( PZ ) de l'élément ( 20 ) temporisateur.

8. Montage suivant l'une des revendications 2 à 7,
**caractérisé en ce qu'**il comprend en outre, une liaison électrique entre l'électrode de travail du commutateur ( Q3 ) de DEL et la première borne ( AZ1 ) de sortie de l'élément ( 20 ) temporisateur, qui est constituée de façon à provoquer une contre réaction d'intensité du commutateur ( Q3 ) de DEL.

9. Montage suivant l'une des revendications 7 ou 8,
**caractérisé en ce que** l'électrode de travail du commutateur ( Q3 ) de DEL est reliée à la première borne ( PZ ) de sortie de l'élément ( 20 ) temporisateur par l'intermédiaire d'une troisième ( D33 ) qui est orientée de manière à servir de diode d'anti-saturation pour le commutateur ( Q3 ) de DEL.

10. Montage suivant l'une des revendications 2 à 9,
**caractérisé en ce que** l'élément ( 20 ) temporisateur et le condensateur ( C1 ) d'amorçage sont conçus, en partant d'un état de charge du condensateur ( C1 ) d'amorçage inférieur à une valeur limite pouvant être prescrite, pour, après une application de la tension ( $U_N$ ) alternative d'alimentation, fermer le commutateur ( Q3 ) de DEL avant que ne s'applique au condensateur ( C1 ) d'amorçage une tension suffisante pour le déclenchement du dispositif ( D14 ) d'amorçage.

11. Montage suivant l'une des revendications 2 à 10,
**caractérisé en ce que** l'élément ( 20 ) temporisateur et le condensateur ( C1 ) d'amorçage sont conçus, à partir d'un état de charge du condensateur ( C1 ) d'amorçage supérieur à une valeur limite pouvant être prescrite, pour, après une application de la tension ( UN ) alternative d'amorçage, déclencher le dispositif d'amorçage avant que ne s'applique à l'électrode de commande du commutateur ( Q3 ) de DEL une tension suffisante pour fermer le commutateur ( Q3 ) de DEL.

12. Montage suivant l'une des revendications précédentes,
**caractérisé en ce que** le circuit ( 22 ) pull-down comprend le circuit série d'une résistance ( $R_{PD}$ ) ohmique et d'une diode ( $D_{PD}$ ).

13. Montage suivant l'une des revendications précédentes,
**caractérisé en ce qu'**un premier condensateur ( $C_{S1}$ ) est monté entre la première borne ( E1 ) d'entrée de l'entrée et la première borne d'entrée du redresseur ( 14 ) auxiliaire et un deuxième condensateur ( $C_{S2}$ ) est monté entre la deuxième borne ( E2 ) d'entrée de l'entrée et la deuxième borne d'entrée du redresseur ( 14 ) auxiliaire.

14. Montage suivant la revendication 13,
**caractérisé en ce qu'**un troisième condensateur ( $C_{X1}$ ) est monté entre la première borne d'entrée et la deuxième borne d'entrée du redresseur ( 14 ) auxiliaire.

15. Montage suivant l'une des revendications précédentes,
**caractérisé en ce que** le redresseur ( 14 ) auxiliaire est dimensionné pour mettre à disposition une tension à sa sortie qui correspond au maximum à 110% de la tension de déclenchement du dispositif ( D14 ) d'amorçage, en étant notamment au maximum de 35V.

16. Procédé pour faire fonctionner au moins une DEL ( LD5, LD6 ) et au moins une lampe ( LA ) fluorescente sur un montage ayant une entrée, ayant une première borne ( E1 ) d'entrée et une deuxième borne ( E2 ) d'entrée pour l'application d'une tension ( $U_N$ ) alternative d'alimentation, un redresseur ( 12 ) principal qui a une première et une deuxième borne d'entrée et une première borne ( A11 ) de sortie et une deuxième borne ( A12 ) de sortie, la première et la deuxième borne d'entrée du redresseur ( 12 ) principal étant reliées à la première borne ( E1 ) d'entrée et à la deuxième borne ( E2 ) d'entrée pour l'application de la tension ( UN ) alternative d'alimentation, un redresseur ( 14 ) auxiliaire qui a une première et une deuxième borne d'entrée et une première borne ( A13 ) de sortie et une deuxième borne ( A14 ) de sortie, la première et la deuxième borne d'entrée du redresseur ( 14 ) auxiliaire étant reliées à la première borne ( E1 ) d'entrée à la deuxième borne ( E2 ) d'entrée pour l'application de la tension ( UN ) alternative d'alimentation, un onduleur ( 16 ) qui comprend au moins un circuit série constitué d'un premier commutateur ( Q1 ) et d'un deuxième commutateur ( Q2 ), le circuit série étant relié à la première borne ( A11 ) de sortie et à la deuxième borne ( A12 ) de sortie du redresseur ( 12 ) principal et sa sortie ayant au moins une borne de connexion de la lampe ( LA ) fluorescente, le premier et le deuxième commutateur ayant respectivement une électrode de commande, une électrode de travail et une électrode de référence ; un dispositif ( D14 ) d'amorçage ayant une première et une deuxième borne, sa première borne étant reliée à une électrode de commande de l'un des commutateurs de l'onduleur ( 16 ) ; un circuit ( 22 ) pull-down ayant une première et une deuxième borne, sa première borne étant reliée à la sortie de l'onduleur ( 16 ) ; et un condenseur ( C1 ) d'amorçage pour mettre de l'énergie à disposition des dispositifs ( D14 ) d'amorçage ; dans lequel la deuxième borne du dispositif ( D14 ) d'amorçage et la deuxième borne du circuit ( 22 ) pull-down sont reliées à la première borne ( A13 ) de sortie du redresseur ( 14 ) auxiliaire ; dans lequel le condensateur ( C1 ) d'amorçage est monté entre la première borne ( A13 ) de sortie et la deuxième ( A14 ) de sortie du redresseur ( 14 ) auxiliaire ; et dans lequel il est monté en parallèle au condensateur ( C1 ) d'amorçage un circuit série qui comprend une première borne et une deuxième borne pour la au moins une DEL ( LD5, LD6 ) et un commutateur ( Q3 ) de DEL, le commutateur ( Q3 ) de DEL ayant une électrode de commande, une électrode de travail et une électrode de référence, et un élément ( 20 ) temporisateur qui a un condensateur ( C6 ) d'élément temporisateur ;

comprenant les stades suivants après l'application de la tension ( $U_N$ ) alternative d'alimentation :

a1 ) charge du condensateur ( C6 ) d'élément temporisateur et du condensateur ( C1 ) d'amorçage ;

a2 ) application de la tension ( $U_Z$ ) chutant aux bornes du condensateur ( C6 ) de l'élément temporisateur à l'électrode de commande du commutateur ( Q3 ) de DEL ;

a3 ) application de la tension ( $U_{C1}$ ) chutant aux bornes du condensateur ( C1 ) d'amorçage au dispositif ( D14 ) d'amorçage ;

**caractérisé par** les stades suivants s'effectuant en fonction de l'état de charge du condensateur d'amorçage .

b1 ) si l'état de charge du condensateur ( C1 ) d'amorçage était, avant l'application de la tension ( $U_N$ ) alternative d'alimentation, inférieur à une valeur limite pouvant être prescrite :

mise en circuit de commutateur ( Q3 ) de DEL et ainsi mise en service de la au moins une DEL ( LD5, LD6 ) sans déclenchement du dispositif ( D14 ) d'amorçage ;

b2 ) si l'état de charge du condensateur ( C1 ) d'amorçage était, avant l'application de la tension ( $U_N$ ) alternative d'alimentation, supérieur à une valeur limite pouvant être prescrite :

déclenchement du dispositif ( D14 ) d'amorçage et ainsi mise en circuit de la lampe ( LA ) fluorescente, alors que le commutateur ( Q3 ) de DEL est ouvert et ainsi alors qu'au moins une DEL ( D5 ; D6 ) est hors circuit.

FIG 1

FIG 2

FIG 3

FIG 5

FIG 4

FIG 6